# EUROPÄISCHE PATENTSCHRIFT

(11) **EP 2 535 568 B1**
(45) Veröffentlichungstag und Bekanntmachung des Hinweises auf die Patenterteilung: **20.07.2016**
(21) Anmeldenummer: 12169956.5
(22) Anmeldetag: 04.01.2007
(51) Int. Cl.: F03D 7/02, F03D 7/04

(54) **Verfahren zum Betreiben einer Windenergieanlage und Windenergieanlage**
Method for operating a wind farm and wind farm
Procédé de fonctionnement d'une éolienne et éolienne

(30) Priorität: 11.01.2006 DE 102006001613
(43) Veröffentlichungstag der Anmeldung: 19.12.2012
(62) Teilanmeldung aus: 07700184.0
(73) Patentinhaber: Senvion GmbH, 22297 Hamburg (DE)
(72) Erfinder: Steiner, Stefan, 24943 Flensburg (DE); Von Mutius, Martin, 24358 Ascheffel (DE)
(74) Vertreter: Seemann, Ralph

(56) Entgegenhaltungen:
- EP-A2- 0 942 168
- EP-A2- 1 612 414
- WO-A1-01/66940
- DE-C1- 19 626 402
- Bradford S. Linscott ET AL: "The Mod-2 Wind Turbine Development Project", , 31. Juli 1981 (1981-07-31), Seiten 1-23, XP55034683, Gefunden im Internet: URL:http://ntrs.nasa.gov/archive/nasa/casi .ntrs.nasa.gov/19810019068_1981019068.pdf [gefunden am 2012-08-03]
- "Technical Specification of the NEG Micon NM750/48 Wind Turbine", Planet - project planning network, 25 February 1999 (1999-02-25), XP055165968, Retrieved from the Internet: URL:http://www.pcj.com/dnn/Portals/0/Docum ents/Appendix 8.PDF [retrieved on 2015-01-29]
- E MULJADI ET AL: 'Pitch-Controlled Variable-Speed Wind Turbine Generation National Renewable Energy Laboratory' NATIONAL RENEWABLE ENERGY LABORATORY, [Online] 07 Oktober 1999, 1999 IEEE INDUSTRY APPLICATIONS SOCIETY ANNUAL MEETING, XP055166089 Gefunden im Internet: <URL:http://www.nrel.gov/docs/fy00osti/2714 3.pdf> [gefunden am 2015-01-30]

## Beschreibung

Die Erfindung betrifft ein Verfahren zum Betreiben einer Windenergieanlage, wobei die Windenergieanlage einen Rotor, wenigstens ein winkelverstellbares Rotorblatt, eine mechanische Bremsvorrichtung zum Abbremsen des Rotors und eine Betriebsführungseinrichtung sowie ein Sicherheitssystem aufweist. Die Erfindung betrifft ferner eine Windenergieanlage mit einem Rotor, wenigstens einem winkelverstellbaren Rotorblatt, einer mechanischen Bremse zum Abbremsen des Rotors, einer Betriebsführungseinrichtung und einem Sicherheitssystem.

Verfahren zum Betreiben einer Windenergieanlage und Windenergieanlagen sind an sich bekannt. Hierzu wird beispielsweise auf das Lehrbuch "Windkraft Systemauslegung, Netzintegration und Regelung", Siegfried Heier, 4. Auflage, B.G.Teubner, Februar 2005, hingewiesen. Der Betrieb von Windenergieanlagen und Windenergieanlagen selbst ist kritisch im Hinblick auf deren Auslegung, insbesondere im Hinblick auf Sicherheitsaspekte. Insbesondere bei starken Winden in Verbindung mit einem Netzausfall, bei dem das durch den Wind im Rotor erzeugte aerodynamische Drehmoment auf keinen Widerstand durch den Generator trifft, kann es zu extremen Turmlasten, insbesondere Turmfußbiegemomenten, unkontrollierten Blattwinkelverstellungen und ggf. sogar der Auslösung einer Sicherheitskette kommen. Durch den Ausfall des Netzes bzw. allgemeiner durch einen Lastabwurf des Generators beginnt der Rotor bei starkem Wind sich zu beschleunigen, bis das Bremssystem der Windenergieanlage den Rotor anfängt zu bremsen. In Abhängigkeit der Stärke der Bremsleistung treten unterschiedlich starke Belastungen an der Windenergieanlage auf.

Bradford S. Linscott et al. "The Mod-2 Wind Turbine Development Project", 31. Juli 1981, offenbart eine Windkraftanlage mit einer aerodynamischen Bremse und einer mechanischen Feststellbremse.

"Technical Specification of the NEG Micon NM750/48 Wind Turbine", Planet - project planning network, 25. Februar 1999, offenbart eine Rotorbremsvorrichtung, die bei der Überschreitung einer ersten Drehzahlgrenze aktiviert wird. Die Rotorbremsvorrichtung sowie ein Sicherheitssystem, welches ausgelöst wird, wenn eine zweite Drehzahlgrenze überschritten wird, sind für Windkraftanlagen vorgesehen, die mit fest eingestellten Rotorblattanstellwinkeln betrieben werden.

Es ist Aufgabe der vorliegenden Erfindung, ein sicheres Verfahren zum Betreiben einer Windenergieanlage und eine entsprechende sichere Windenergieanlage mit reduzierten Extrembelastungen anzugeben.

Gelöst wird diese Aufgabe durch ein Verfahren zum Betreiben einer Windenergieanlage, wobei die Windenergieanlage einen Rotor, wenigstens ein winkelverstellbares Rotorblatt, eine mechanische Bremsvorrichtung zum Abbremsen des Rotors und eine Betriebsführungseinrichtung sowie ein Sicherheitssystem aufweist, mit den folgenden Verfahrensschritten:
- Abbremsen des Rotors über eine Winkelverstellung mit einer mittleren Winkelverstellungsrate von weniger als 8,5°/s des wenigstens einen Rotorblatts nach Auftritt eines Störsignals,
- Abbremsen des Rotors über die mechanische Bremsvorrichtung, sobald die Drehzahl des Rotors eine vorgebbare erste Drehzahlgrenze überschreitet, wobei die mechanische Bremsung durch die Betriebsführungseinrichtung ausgelöst wird,
- Auslösen des Sicherheitssystems, sobald die Drehzahl des Rotors eine vorgebbare zweite Drehzahlgrenze überschreitet, wobei der Rotor abgebremst wird und wobei die zweite Drehzahlgrenze größer ist als die erste Drehzahlgrenze.

Durch das erfindungsgemäße Verfahren ist es möglich, selbst bei extremen Windböen und bei gleichzeitigem Lastabwurf des Generators, die Windenergieanlage so zu betreiben, dass keine zu hohen Belastungen, beispielsweise seitens eines Turmfußbiegemomentes oder eines Rotorbiegemomentes, entstehen.

Insbesondere die Kombination des Abbremsens des Rotors über eine Winkelverstellung mit einer mittleren Winkelverstellungsrate von weniger als 8,5°/s und des Abbremsens des Rotors über die mechanische Bremsvorrichtung, sobald die Drehzahl des Rotors eine vorgebbare erste Drehzahlgrenze überschreitet, führt kombiniert mit den weiteren Merkmalen zu dem erfindungsgemäßen Erfolg. Die niedrige Winkelverstellungsrate dient insbesondere dazu zu verhindern, dass die Rotorblätter zu schnell gedreht werden, so dass ein ungewünschter Umkehrschub verhindert wird. Zugrunde liegt die Erkenntnis, dass eine möglichst langsame Winkelverstellungsrate zur Abbremsung des Rotors die Belastungen reduziert. Der Nachteil der Gefahr der Überdrehzahl des Rotors bei unvorhersagbaren Windböen ist durch die erfindungsgemäßen Zusatzmaßnahmen (erste und zweite Drehzahlgrenze) erfindungsgemäß sicher beherrschbar. Im Stand der Technik ist von derart niedrigen Winkelverstellungsraten bei Störfällen wie z.B. Lastabfall bislang abgesehen worden, weil die bei Böen auftretenden Überdrehzahlzustände zu unakzeptabel hohen Belastungen geführt haben.

Im Rahmen der Erfindung bedeutet eine gemittelte Winkelverstellungsrate, insbesondere eine Mittelung der Winkelverstellungsrate über den Zeitraum, in dem das Abbremsen über eine Winkelverstellung erfolgt, insbesondere solange die mechanische Bremsvorrichtung nicht den Rotor abbremst. Vorzugsweise ist die Winkelverstellungsrate zum Abbremsen des Rotors über eine Winkelverstellung nicht nur im Mittel sondern ständig unterhalb weniger als 8,5°/s.

Vorzugsweise greift die mechanische Bremsvorrichtung bei einer Windenergieanlage mit Getriebe auf der schnelldrehenden Seite des Triebstrangs. Auf dieser Seite befindet sich auch der Generator mit seinem als Läufer bezeichnet rotierenden Teil. Die mechanische Bremsvorrichtung kann allerdings auch auf der langsamen Seite des Triebstrangs, also auf der Seite zwischen Getriebe und Rotorblätter angeordnet werden. Die Windenergieanlage kann aber auch getriebelos ausgestaltet sein, so dass die Bremse im Bereich der Rotornabe oder des Generatorläufers angreift. Im Rahmen der Erfindung beinhaltet der Begriff Rotor insbesondere auch die Begriffe Triebstrang, schnelle Welle, Generatorläufer, Getriebe, Rotorwelle (= langsame Welle) Rotornabe und Rotorblätter. Ein Abbremsen des Rotors bedeutet insbesondere das Abbremsen des Triebstrangs.

Das Abbremsen des Rotors über eine Winkelverstellung kann additiv zum Abbremsen des Rotors über die mechanische Bremsvorrichtung geschehen oder alternativ. Es kann zunächst auch ein alternatives Abbremsen des Rotors über eine Winkelverstellung geschehen und anschließend beide Abbremsvarianten, nämlich über die Winkelverstellung und über die mechanische Bremsvorrichtung, durchgeführt werden.

Nach dem Auslösen des Sicherheitssystems kann der Rotor insbesondere vorzugsweise unter Übergehung der Betriebsführungseinrichtung abgebremst werden. Die Betriebsführungseinrichtung kann allerdings auch Teil des Sicherheitssystems sein, bzw. das Sicherheitssystem kann Teil der Betriebsführungseinrichtung sein, so dass die Betriebsführungseinrichtung nicht notwendigerweise für das Bremsen nach Auslösen des Sicherheitssystems übergangen werden muss.

Die Form und die Stärke einer Windbö kann mit einem Normalwindprofilmodell berechnet werden, wie dieses beispielsweise in dem Lehrbuch "Wind Energy Handbook", Tony Burton, David Sharpe, Nick Jenkins, Ervin Bossanyi, John Wiley & Sons Ltd., November 2002, auf den Seiten 214 bis 218 angegeben ist. Insbesondere die Formel (5.1) ist hier von Relevanz, wobei für den erfindungsgemäßen Fall der Auftrittswahrscheinlichkeit von weniger als einmal in drei Monaten für den unteren Grenzwert der drei Monate ein Faktor β von ca. 4,6 anzusetzen ist. Der Einfachheit halber wird für die Zeitdauer der extremen Windbö (in diesem Dokument mit "gust" beschrieben) mit 10 s angesetzt. Für die Auslegung einer Windenergieanlage und die Höhe der ersten und zweiten Drehzahlgrenze wird je nach Aufstellungsort der Windenergieanlage von vorbestimmten bzw. vorbestimmbaren Lastfällen ausgegangen, die im Betrieb der Windenergieanlage bzw. von der Windenergieanlage ohne Schädigung derselben abgefangen werden können müssen. Derartige Lastfälle definiert beispielsweise der Germanische Lloyd bzw. entsprechend andere Sicherheitsinstitute. Je nach Definition der Lastfälle dienen entsprechende Computerprogramme, die beispielsweise dem Computerprogramm "Flex" des Herrn Stig Oye entsprechen bzw. von diesem abgeleitet bzw. weiterentwickelt wurden, um Windenergieanlagen und den Betrieb von Windenergieanlagen zu simulieren und so je nach Lastfall herauszufinden, welche Belastungen auf die Windenergieanlage im Betrieb auftreten können. Diese Belastungen werden üblicherweise in vorbestimmten Wahrscheinlichkeiten auftreten. Beispielsweise wird in den Dokument "Wind Energy Handbook" von Tony Burton et al., das vorstehend genannt wurde, im "load case 1.5" auf S. 216 bis S. 218 von einer 1-Jahres Bö ausgegangen, also einer extrem starken Bö, die mit einer Wahrscheinlichkeit von einmal jährlich auftritt.

Die Aufgabe wird also durch ein Verfahren zum Betreiben einer Windenergieanlage gelöst, wobei die Windenergieanlage einen Rotor, wenigstens ein winkelverstellbares Rotorblatt, eine mechanische Bremsvorrichtung zum Abbremsen des Rotors, eine Betriebsführungseinrichtung und ein Sicherheitssystem aufweist, mit den folgenden Verfahrensschritten:
- Abbremsen des Rotors über eine Winkelverstellung mit einer mittleren Winkelverstellungsrate von weniger als 8,5°/s des wenigstens einen Rotorblatts nach Auftritt eines Störsignals,
- Abbremsen des Rotors über die mechanische Bremsvorrichtung, sobald die Drehzahl des Rotors eine vorgebbare erste Drehzahlgrenze überschreitet, und wobei die mechanische Bremsung durch die Betriebsführungseinrichtung ausgelöst wird,
- Auslösen des Sicherheitssystems, sobald die Drehzahl des Rotors eine vorgebbare zweite Drehzahlgrenze überschreitet, wobei der Rotor abgebremst wird und wobei die zweite Drehzahlgrenze größer ist als die erste Drehzahlgrenze.

Vorzugsweise wird die zweite Drehzahlgrenze bei einer Windbö mit einer Auftrittswahrscheinlichkeit von einmal im Jahr nicht überschritten. Beispielsweise gibt der Germanische Lloyd vor, dass bei einem vorbestimmten Lastfall wie beispielsweise dem Auftritt einer "Einjahresbö", also einer extremen Windbö, die mit einer Auftrittswahrscheinlichkeit von einmal jährlich auftritt, und zwar an dem entsprechenden Standort der Windenergieanlage, gewisse Beanspruchungen im Rotor beispielsweise nicht überstiegen werden dürfen bzw. die auftretenden Beanspruchungen im Vergleich bzw. im Verhältnis zu den maximal auftretenden Beanspruchungen ein definiertes Sicherheitsniveau aufweisen müssen.

Die Auslegung der zweiten Drehzahlgrenze so, dass sie bei einer Jahresböe nicht überschritten wird, hat gegenüber einer Auslegung auf eine Dreimonatsböe den Vorteil, dass die Bremse deutlich seltener einfällt, und somit der Verschleiß der Bremse und des gesamten Triebstrangs reduziert wird.

Vorzugsweise ist das Störsignal ein Überschreiten einer dritten Drehzahlgrenze, die kleiner ist als die erste Drehzahlgrenze, ein Lastabwurf des Generators, ein Fehler im Netz und/oder ein Fehler in der Winkelverstellung wenigstens eines Rotorblatts.

Ein noch sicherer Betrieb ist möglich, wenn die Winkelverstellungsrate des wenigstens einen Rotorblatts nach Auftritt des Störsignals kleiner als 8°/s, insbesondere vorzugsweise kleiner 6,5°/s und insbesondere vorzugsweise kleiner als 4,6°/s, insbesondere kleiner 4,5°/s, ist. Diese Werte können als Mittelwerte und/oder als IstWerte ohne Mittelung angesehen werden. Die Winkelverstellungsrate wird zweckmäßigerweise von einer der Betriebsführungseinrichtung zugeordneten Regelvorrichtung oder einer separaten Regelvorrichtung geregelt. Hierbei gibt die Betriebsführungseinrichtung die Winkelverstellungsrate vor, und die Regelvorrichtung regelt dann die Winkelverstellungsrate bzw. die Verstellung des Winkels des jeweiligen Rotorblattes.

Vorzugsweise wird die Winkelverstellungsrate des wenigstens einen Rotorsblatts bei Überschreiten eines vorgebbaren Blattwinkels auf eine kleine Winkelverstellungsrate, insbesondere auf eine Winkelverstellungsrate geändert, die kleiner als die Hälfte, insbesondere kleiner als ein Viertel der vorherigen Winkelverstellungsrate ist.

Bei Auftreten des Störsignals wird ausgehend von der existierenden Blattwinkelstellung des Rotorblatts mit der erfindungsgemäßen Winkelverstellungsrate in Richtung Fahnenstellung der Blattwinkel gedreht. Hierbei kann der Ausgangspunkt eine Nullstellung des Rotorblatts sein. Es kann allerdings auch eine Stellung vorhanden sein, die schon fortgeschritten in Richtung Fahnenstellung ist. Die Nullstellung ist vorzugsweise die Rotorblattstellung, mit der im Betrieb mit optimaler Drehzahl die maximale Leistung erzielt werden kann, häufig auch mit Betriebsstellung bezeichnet.. Die Fahnenstellung ist vorzugsweise diejenige Stellung, in der keine Leistung erzeugt werden kann. Die Rotorblätter sind hierbei, wie eine Fahne, aus dem Wind gedreht.

Vorzugsweise ist die erste Drehzahlgrenze in einem Bereich von mehr als 15 % oberhalb einer Nenndrehzahl der Windenergieanlage, die insbesondere eine Nennleistung von mehr als 1,45 MW aufweist. Die Nenndrehzahl ist im Rahmen der Erfindung eine Drehzahl, bei der die Windenergieanlage erstmals eine Nennleistung erreicht. Die zugehörige Windgeschwindigkeit heißt dann Nennwindgeschwindigkeit. Insbesondere bei Windenergieanlagen, bei denen bei hohen Windgeschwindigkeiten oberhalb der Nennwindgeschwindigkeit die Arbeitsdrehzahl reduziert wird, kann sich der Begriff der Nenndrehzahl auch auf die reduzierte Arbeitsdrehzahl am jeweiligen Arbeitspunkt beziehen. Eine Nenndrehzahl kann beispielsweise bei einer Windenergieanlage mit einer Nennleistung von 1,5 MW 1.800 Umdrehungen pro Minute (rpm) sein. Diese Nenndrehzahl wird an dem Läufer des Generators oder an der schnellen Welle des Getriebes gemessen. Es kann allerdings auch eine andere Nenndrehzahl definiert werden, nämlich diejenige, die an der Rotornabe herrscht bzw. die im Generator herrscht, wenn kein Getriebe vorhanden ist. Diese entsprechenden Nenndrehzahlen können vorzugsweise im Bereich von 5 bis 20 Umdrehungen pro Minute sein, insbesondere vorzugsweise bei 8 bis 18 Umdrehungen pro Minute. Unter Nennleistung wird die maximale Dauerleistung der Windenergieanlage verstanden, also diejenige Leistung, bei der ungefähr ein Optimum an entnommener Leistung bei gleichzeitig möglichst geringem Verschleiß der Windenergieanlage vorherrscht. Die Nennleistung wird insbesondere bei Offshore-Windenergieanlagen, insbesondere an Starkwindorten, die Leistung sein, bei der die Windenergieanlage über die gesamte Lebensdauer die größte Gesamtleistung erzeugt.

Vorzugsweise liegt die erste Drehzahlgrenze zwischen 20 und 35 %, insbesondere zwischen 22 und 28 % oberhalb der Nenndrehzahl der Windenergieanlage. Insbesondere bevorzugt ist ein Wert ungefähr 25 % oberhalb der Nenndrehzahl der Windenergieanlage.

Die zweite Drehzahlgrenze liegt vorzugsweise in einem Bereich von 35 % bis 45 % oberhalb einer Nenndrehzahl der Windenergieanlage, die insbesondere eine Nennleistung von mehr als 1,45 MW aufweist. Diese zweite Drehzahlgrenze, bei deren Überschreitung das Sicherheitssystem ausgelöst wird, liegt oberhalb der bisher für Anlagen größer 1,45 MW im Stand der Technik üblichen Drehzahlgrenze. Bei kleineren und somit weniger trägen und belastungskritischen Anlagen (z.B. 600 kW) ist diese Drehzahlgrenze höher anzusetzen.

Vorzugsweise liegt die zweite Drehzahlgrenze in einem Bereich von 5 % bis 20 % oberhalb der ersten Drehzahlgrenze der Windenergieanlage, wobei der niedrige Bereich insbesondere bei sehr steifen, z.B. getriebelosen Triebsträngen interessant ist, da dort keine Drehschwingungen auftreten.

Insbesondere vorzugsweise liegt die dritte Drehzahlgrenze im Bereich von 10 bis 20 %, insbesondere von 15 bis 17 % oberhalb einer Nenndrehzahl einer Windenergieanlage, die insbesondere eine Nennleistung von mehr als 1,45 MW aufweist. Die dritte Drehzahlgrenze liegt vergleichsweise niedrig. Das heißt, dass Abbremsen der Windenergieanlage über die aerodynamische Bremse durch Verstellen des Winkels des wenigstens einen Rotorblatts durch eine relativ niedrige Winkelverstellungsrate beginnt schon bei einer relativ niedrigen Drehzahlgrenze.

Vorzugsweise wird das Abbremsen des Rotors über die mechanische Bremsvorrichtung bei Unterschreiten einer vierten vorgebbaren Drehzahlgrenze beendet. Dieses geschieht vorzugsweise dann, wenn sich die Windenergieanlage in einem sicheren Anlagenzustand befindet, der extreme Lastfall also beendet ist.

Wenn das Abbremsen des Rotors über die mechanische Bremsvorrichtung beendet wird, wenn ein mittlerer Rotorblattwinkel einen vorgebbaren Grenzwert überschreitet und eine vorgebbare Zeit seit dem Beginn des Abbremsens des Rotors über die mechanische Bremsvorrichtung überschritten ist, ist ein schonender und sicherer Betrieb insbesondere der mechanischen Bremsvorrichtung möglich. Insbesondere wird somit eine gefährliche Bremsüberhitzung vermieden.

Im Rahmen der Erfindung bedeutet bei Vorhandensein eines Störsignals insbesondere auch bei Auftreten eines Störsignals.

Die Aufgabe wird durch eine Windenergieanlage mit einem Rotor, wenigstens einem winkelverstellbaren Rotorblatt, einer mechanischen Bremse zum Abbremsen des Rotors, einer Betriebsführungseinrichtung und einem Sicherheitssystem gelöst, wobei eine erste Bremsvorrichtung vorgesehen ist, die den Rotor über eine Winkelverstellung des wenigstens einen Rotorblatts mit einer mittleren Winkelverstellungsrate von weniger als 8,5°/s bei Vorhandensein eines Störsignals bremst, wobei eine zweite Bremsvorrichtung zum mechanischen Bremsen des Rotors vorgesehen ist, sobald die Drehzahl des Rotors eine vorgebbare erste Drehzahlgrenze überschreitet, wobei die zweite Bremsvorrichtung durch die Betriebsführungseinrichtung auslösbar ist, wobei das Sicherheitssystem in dem Fall, in dem die Drehzahl des Rotors eine vorgebbare zweite Drehzahlgrenze überschreitet, zum Bremsen des Rotors vorgesehen ist, wobei die zweite Drehzahlgrenze größer ist als die erste Drehzahlgrenze.

Vorzugsweise wird die zweite Drehzahlgrenze bei einer Windbö mit einer Auftrittswahrscheinlichkeit von einmal im Jahr nicht überschritten. Dies bedeutet insbesondere, dass die Auftrittswahrscheinlichkeit einer derartigen Belastung so gering ist, dass sie mit einem relativ geringen Sicherheitsniveau nachgewiesen werden kann.

Vorzugsweise ist das Störsignal ein Überschreiten einer dritten Drehzahlgrenze, welche kleiner ist als die erste Drehzahlgrenze, ein Lastabwurf des Generators, ein Fehler im Netz und/oder ein Fehler in der Winkelverstellung wenigstens eines Rotorblatts. Vorzugsweise ist die Winkelverstellungsrate des wenigstens einen Rotorblatts bei Vorhandensein des Störsignals kleiner 8°/s, insbesondere kleiner 6,5°/s, insbesondere kleiner 4,6°/s, insbesondere kleiner 4,5°/s. Die Winkelverstellungsrate ist vorzugsweise von einer der Betriebsführungseinrichtung zugeordneten Regelvorrichtung oder einer separaten Regelvorrichtung regelbar. Die Winkelverstellungsrate des wenigstens einen Rotorblatts ist zweckmäßig bei Überschreitung eines vorgebbaren Blattwinkels auf eine kleinere Winkelverstellungsrate, insbesondere auf eine Winkelverstellungsrate, die kleiner als die Hälfte, insbesondere kleiner als ein Viertel der vorherigen Winkelverstellungsrate, änderbar. Alternativ zur Regelung durch die Regelvorrichtung kann die Reduzierung der Verstellrate auch durch eine geeignete Hardwareanordnung, z.B. gestufte Akkupakete zur Energieversorgung der Verstellantriebe, erfolgen.

Die erste Drehzahlgrenze liegt vorzugsweise in einem Bereich von mehr als 15 % oberhalb einer Nenndrehzahl der Windenergieanlage, die insbesondere eine Nennleistung von mehr als 1,45 MW aufweist. Bei einer Nenndrehzahl von 1.800 Umdrehungen pro Minute ist die erste Drehzahlgrenze dann vorzugsweise in einem Bereich von mehr als 2.070 Umdrehungen pro Minute und insbesondere vorzugsweise in einem Bereich von mehr als 2.160 Umdrehungen pro Minute. Vorzugsweise liegt die erste Drehzahlgrenze zwischen 20 und 35 %, insbesondere zwischen 22 und 28 % oberhalb der Nenndrehzahl der Windenergieanlage. Dieses entspricht bei einer Nenndrehzahl von 1.800 einem Bereich zwischen 2.160 und 2.430, insbesondere einem Bereich von 2.196 bis 2.304 Umdrehungen pro Minute.

Vorzugsweise liegt die zweite Drehzahlgrenze in einem Bereich von 35 % bis 45 % oberhalb einer Nenndrehzahl der Windenergieanlage, die insbesondere eine Nennleistung von mehr als 1,45 MW aufweist. Bei einer Nenndrehzahl von 1.800 Umdrehungen pro Minute entspricht dieses einem Bereich von 2.430 Umdrehungen pro Minute bis 2.610 Umdrehungen pro Minute.

Vorzugsweise liegt die zweite Drehzahlgrenze in einem Bereich von 5 % bis 20 % oberhalb der ersten Drehzahlgrenze der Windenergieanlage. Dieses ist bei einer ersten Drehzahlgrenze von 2.200 Umdrehungen pro Minute von 2.310 bis 2.640 Umdrehungen pro Minute.

Vorzugsweise liegt die dritte Drehzahlgrenze in einem Bereich von 10 % bis 20 %, insbesondere von 15 % bis 17 %, oberhalb einer Nenndrehzahl der Windenergieanlage, die insbesondere eine Nennleistung von mehr als 1,45 MW aufweist. Dieses ist bei einer Nenndrehzahl von 1.800 Umdrehungen pro Minute in einem Bereich von 1.980 bis 2.160 Umdrehungen pro Minute, insbesondere in einem Bereich von 2.070 bis 2.106 Umdrehungen pro Minute. Vorzugsweise ist das Abbremsen des Rotors über die mechanische Bremsvorrichtung bei Unterschreiten einer vierten vorgebbaren Drehzahlgrenze, beispielsweise bei Nenndrehzahl, beendbar. Ferner ist vorzugsweise das Abbremsen des Rotors über die mechanische Bremsvorrichtung beendbar, wenn ein mittlerer Rotorblattwinkel einen vorgebbaren Grenzwert überschreitet und eine vorgebbare Zeit seit dem Beginn des Abbremsens des Rotors über die mechanische Bremsvorrichtung überschritten ist.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer Windenergieanlage,
- Fig. 2: ein schematisches Blockdiagramm wesentlicher Komponenten einer Windenergieanlage,
- Fig. 3: schematische Diagramme für zwei verschiedene Lastfälle, die bei einer erfindungsgemäßen Windenergieanlage auftreten, nämlich
- Fig. 3a: die Windgeschwindigkeit über der Zeit einer berechneten Einjahresbö,
- Fig. 3b: die Winkelverstellungsrate über der Zeit,
- Fig. 3c: die Drehzahl über der Zeit,
- Fig. 3d: die elektrische Leistung über der Zeit,
- Fig. 3e: das Bremsmoment über der Zeit,
- Fig. 3f: ein Turmfußbiegemoment über der Zeit und
- Fig. 3g: das Rotordrehmoment über der Zeit,
- Fig. 4: schematische Diagramme von Werten zweier Windenergieanlagen, die auf der einen Seite (durchgezogene Linie) gemäß der Erfindung vorliegen und auf der anderen Seite (gestrichelte Linien) gemäß dem Stand der Technik vorliegen, wobei
- Fig. 4a: die Windgeschwindigkeit einer berechneten Bö über der Zeit,
- Fig. 4b: eine Winkelverstellungsrate über der Zeit,
- Fig. 4c: eine Drehzahl über der Zeit,
- Fig. 4d: eine elektrische Leistung über der Zeit,
- Fig. 4e: ein Bremsmoment über der Zeit,
- Fig. 4f: ein Turmfußbiegemoment über der Zeit und
- Fig. 4g: ein Rotordrehmoment über der Zeit darstellt.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

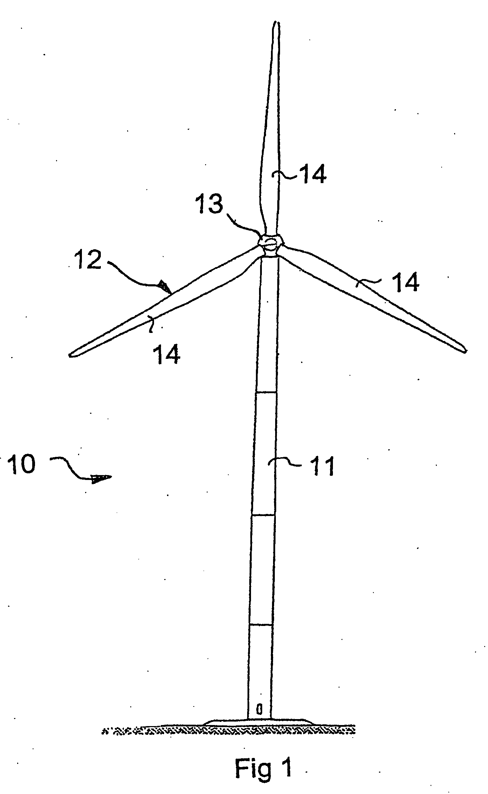

Fig. 1 zeigt eine schematische Darstellung einer Windenergieanlage 10. Die Windenergieanlage 10 weist einen Turm 11 auf und einen Rotor 12, der drei Rotorblätter 14 umfasst, die auf einer Rotornabe 13 angebracht sind. Bei Windeinfall dreht der Rotor 12 in an sich bekannter Weise. Hierdurch kann Leistung von einem an den Rotor 12 bzw. an die Rotornabe 13 angeschlossenen Generator erzeugt werden und in ein Verbrauchernetz abgegeben werden.

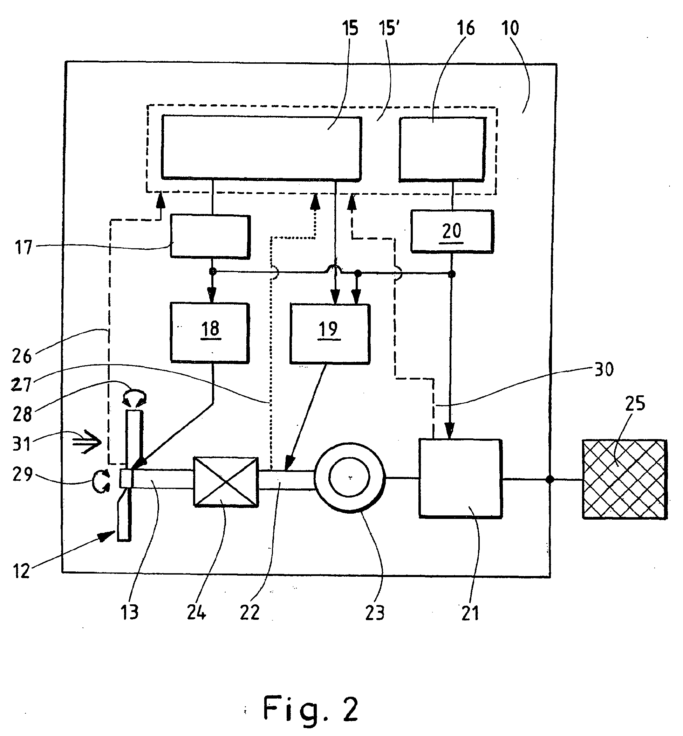

Fig. 2 zeigt schematisch wesentliche Komponenten der erfindungsgemäßen Windenergieanlage 10. Eine Betriebsführung 15, die auch als Betriebsführungseinrichtung oder Betriebsführungssystem bezeichnet werden kann, steuert und/oder regelt den Betrieb der Windenergieanlage 10. Nebengeordnet zu der Betriebsführung 15 ist eine Sicherheitsüberwachung 16, die mit einer Sicherheitskette 20 verbunden ist. Die Sicherheitskette 20 umfasst beispielsweise einen Vibrationsmelder, einen manuellen (Notaus-) Schalter und ein Drehzahlschaltrelais. Die Sicherheitskette 20 dient dazu, dass bei Vorliegen eines sicherheitsrelevanten Ereignisses, beispielsweise zu großen Vibrationen oder das Betätigen des Notausschalters durch eine Bedienperson, die Windenergieanlage in einen unkritischen Zustand heruntergefahren wird. Die Sicherheitskette 20 kann als Hardware-Kette ausgestaltet sein. Beim Auslösen der Sicherheitskette 20 wird, was durch den Pfeil zu den elektrischen Komponenten 21 angedeutet ist, der Generator 23 vom Netz 25 genommen und die Rotorwelle 9 bzw. die schnelle Welle 22 abgebremst, beispielsweise über die Blattverstellung 18 bzw. die mechanische Bremse 19 oder auch, was nicht dargestellt ist, unmittelbar unter Umgehung einer oder mehrerer Regel- oder Steuervorrichtungen wie die Blattverstellung 19. Die Sicherheitsüberwachung 16 kann auch derart ausgestaltet sein, dass diese die Betriebsführung 15 auf Funktionalität überprüft. Die Sicherheitsüberwachung 16 ist insofern als eine Art Watch-Dog vorzugsweise ausgeführt. Die Betriebsführung 15' kann, wie gestrichelt dargestellt ist, auch die Sicherheitsüberwachung 16 umfassen. Es handelt sich dann um eine Betriebsführung 15' mit integrierter Sicherheitsüberwachung 16.

Die Betriebsführung 15, 15' ist über entsprechende elektronische Datenleitungen mit einem Regler 17 und der Blattverstellung 18 verbunden und außerdem mit der mechanischen Bremse 19. Unter Blattverstellung 18 wird insbesondere ein Aktuator verstanden, der für eine Blattverstellung der Rotorblätter 14 sorgt. Entsprechend wird unter mechanischer Bremse 19 ein Aktuator verstanden, der dafür sorgt, dass die mechanische Bremse 19 in diesem Ausführungsbeispiel auf die schnelle Welle 22 wirkt. Die mechanische Bremse 19 kann auch auf die Rotorwelle 9 wirken, was allerdings nicht dargestellt ist.

Mit 26 ist eine Datenverbindung bezeichnet, die einen Rotorblattwinkel bzw. die Rotorblattwinkel der Rotorblätter 14 der Betriebsführung 15 bzw. 15' zuführt. Mit der Bezugsziffer 27 ist eine Datenverbindung dargestellt, die eine Ist-Drehzahl der schnellen Welle 22 der Betriebsführung 15 bzw. 15' zuführt. Mit 30 ist eine Datenleitung bezeichnet, die ein Störsignal, das in diesem Ausführungsbeispiel von elektrischen Komponenten 21 ausgeht, der Betriebsführung 15 bzw. 15' zuführt.

Der Betrieb der Windenergieanlage ist wie folgt. Durch Einfall von Wind wird der Rotor 12 gemäß der Rotationsrichtung 29 gedreht. Hierdurch dreht sich auch die Rotorwelle 9, die mit einem Getriebe 24 in einer Übersetzung von beispielsweise 1:100 die schnelle Welle 22 dreht. Hierdurch wird im Generator 23 eine elektrische Spannung generiert, die in den elektrischen Komponenten 21 geregelt, umgerichtet und/oder in eine Wechselspannung umgewandelt wird. Am Ausgang der elektrischen Komponenten 21 ist eine Verbindung zum Netz 25 vorgesehen, mit dem die Verbraucher mit Spannung bzw. elektrischer Leistung versorgt werden. Allgemein bekannte Regelungs- und Führungskonzepte von Windkraftanlagen sind beispielsweise in Kapitel 5 des Lehrbuches "Windkraftanlagen Systemauslegung, Netzintegration und Reglung" von Siegfried Heier, das oben angegeben ist, offenbart.

Bei Auftreten einer extremen Windbö 31 kann es im Zusammenhang mit einem Lastabfall des Generators, also insbesondere einem abrupten Wegfall der Netzlast, beispielsweise durch ein Umrichter-, ein Generator-, ein Transformator-, ein Netzversagen oder die Auslösung einer Sicherheitskette vorkommen, dass die Drehzahl des Rotors bzw. des Generators in sehr kritische und hohe Drehzahlen gelangen, so dass ein abruptes Abbremsen notwendig wird, was zu starkem Ermüden des Materials der Windenergieanlage oder zu Schädigungen führen kann.

Dem wirkt die Erfindung dadurch entgegen, dass der Rotor 12 bzw. die Rotorwelle 9 bzw. entsprechend die schnelle Welle 22 schon bei Auftreten eines entsprechenden Störsignals beispielsweise schon das Überschreiten einer relativ niedrigen dritten Drehzahlgrenze über eine relativ langsame Winkelverstellung 28 abgebremst wird. Durch die relativ kleine Winkelverstellungsrate von weniger als 8,5°/s, insbesondere weniger als 6,5°/s, wird ein lastarmes Abbremsen initiiert.

Sollte dieses Abbremsen aufgrund der Stärke der Windbö 31 nicht ausreichen und die Drehzahl des Rotors, der im Rahmen der Erfindung auch die Begriffe Triebstrang und Generatorläufer beinhaltet, eine vorgebbare erste Drehzahlgrenze überschreiten, die größer ist als die dritte Drehzahlgrenze, wird über das erfindungsgemäße Bremsprogramm durch die Betriebsführung 15 bzw. 15' die mechanische Bremse 19 initiiert. Erst wenn beide Bremsvarianten, nämlich die aerodynamische Bremsung über die Blattverstellung 18 und die mechanische Bremsung über die mechanische Bremse 19 nicht ausreichen und die Windbö 31 derart stark ist, dass eine zweite Drehzahlgrenze überschritten wird, wird das Sicherheitssystem 16, 20 ausgelöst.

Das Sicherheitssystem 16, 20 bewirkt eine zur Betriebsführung redundante Auslösung der Bremseinrichtungen und ggf. eine noch stärkere Bremswirkung, beispielsweise eine Blattverstellung mit höherer Winkelverstellungsrate und/oder eine Beaufschlagung einer hydraulischen Bremse mit höherem Hydraulikdruck. Die zweite Drehzahlgrenze ist allerdings derart ausgebildet, dass diese auch bei Lastabwurf des Generators nur bei derartig extremen Windböen erreicht wird, die mit einer Wahrscheinlichkeit vorkommen, die geringer ist als einmal in drei Monaten. In diesem speziellen Ausführungsbeispiel soll von einer Windbö ausgegangen werden, die eine Auftrittswahrscheinlichkeit von weniger als einmal im Jahr hat. Eine einfache Ausführung eines gut zu verwendenden Sicherheitssystems, das eine Sicherheitsüberwachung 16 und eine Sicherheitskette 20 umfasst, ist beispielsweise auf den Seiten 473 und 474 der Veröffentlichung "wind Energy Handbook", das vorstehend genannt wurde, beschrieben.

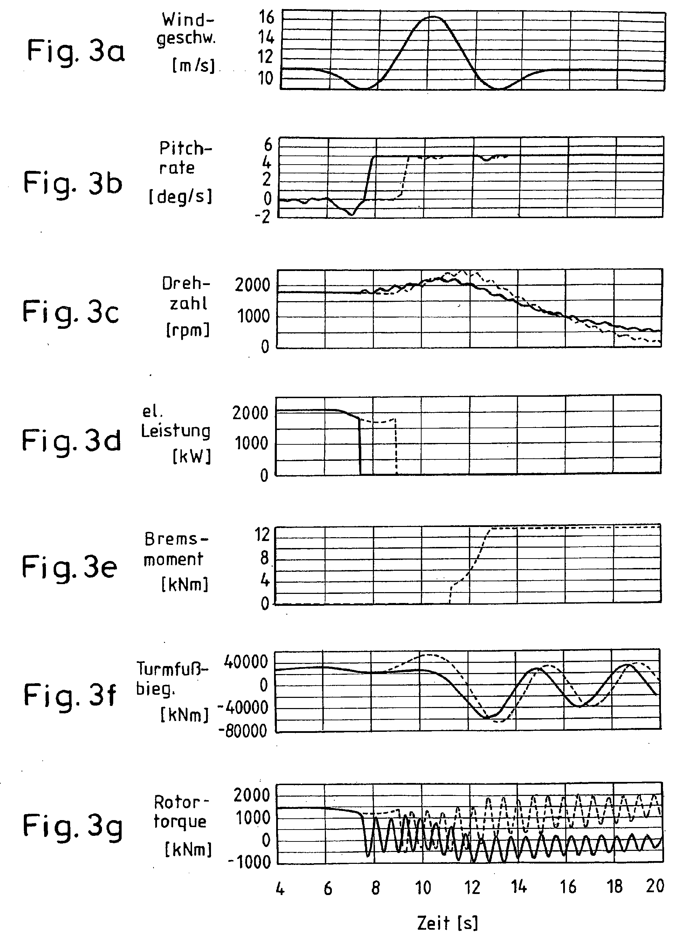

In den Figuren 3a bis 3g sind Diagramme dargestellt, mittels der die Erfindung für zwei verschiedene Lastfälle erläutert werden soll. Fig. 3a zeigt ein Diagramm der Windgeschwindigkeit über der Zeit, wobei dort eine übliche extreme Betriebsbö dargestellt ist, die beispielsweise in der Formel 5.1 auf Seite 215 des Dokuments "wind Energy Handbook", das oben genauer angegeben ist, berechnet werden kann. Es handelt sich um eine Bö, die am betrachteten Standort mit einer Wahrscheinlichkeit von genau einmal im Jahr auftritt. Fig. 3d zeigt ein Diagramm der elektrischen Leistung in kW über der Zeit, wobei zwei Fälle dargestellt sind, nämlich der erste Fall, in dem bei ca. 7,5 Sekunden ein Lastabfall auftritt, nämlich im Minimum der Bö und im Vergleich dazu bei ungefähr 9 Sekunden, was einer Stelle entspricht, die ungefähr in der Mitte der aufsteigenden Flanke der Bö aus Fig. 3a erkennbar ist. Der zweite Fall ist der für die Windenergieanlage kritischere Fall und gestrichelt dargestellt. Zur sicheren Auslegung einer Windenergieanlage muss der Lastabfall zu einem beliebigen Zeitpunkt auftreten dürfen, ohne dass eine gefährliche Situation entsteht.

Fig. 3b zeigt die Winkelverstellungsrate in °/s eines Rotorblatts 14. Es ist zunächst zu erkennen, dass in beiden Fällen aus Fig. 3d aufgrund der Form der Bö mit damit verbundenen geringeren Windgeschwindigkeiten die Pitchrate bzw. Winkelverstellungsrate zunächst negativ ist, d.h. die Rotorblätter werden in den Wind gestellt, damit ein höheres Drehmoment erzeugt werden kann. Bei Lastabfall wird in beiden Fällen die Winkelverstellungsrate durch die Betriebsführung relativ schnell auf einen Bereich von 5°/s eingestellt. Kleinere Einbrüche der Winkelverstellungsrate sind in einer kurzzeitigen Überlastung der Winkelverstellantriebe begründet.

Die durch die Bö erzeugte Drehzahl der schnellen Welle 22 ist in Fig. 3c dargestellt. Die Welligkeit des Drehzahlsignals ist in der unten beschriebenen Torsionsschwingung des Triebstrangs begründet. Im ersten unkritischeren Fall erhöht sich die Drehzahl auf knapp 2.200 Umdrehungen pro Minute und im kritischeren Fall (gestrichelte Linie) erhöht sich diese auf knapp unterhalb 2.500 Umdrehungen pro Minute. Für dieses Ausführungsbeispiel ist die zweite Drehzahlgrenze vorzugsweise auf 2.500 Umdrehungen pro Minute eingestellt. Durch Erhöhung der Auslösedrehzahl für die Sicherheitskette auf 2.500 Umdrehungen pro Minute wird die Auslösung der Sicherheitskette vermieden. Somit können die Lasten der Windenergieanlage deutlich reduziert werden. Die übliche Auslösedrehzahl für die Sicherheitskette bei Windenergieanlagen der Größenordnung von 1,5 MW und größer liegt beispielsweise bei 2.400 Umdrehungen pro Minute.

In Fig. 3e ist das Bremsmoment der mechanischen Bremse über der Zeit in einem Diagramm schematisch dargestellt. Es ist zu erkennen, dass für den ersten Fall (durchgezogene Linie) die mechanische Bremse nicht aktiviert wird, da die erste Drehzahlgrenze nicht überschritten wird. Erst für den zweiten Fall (gestrichelte Linie) wird die mechanische Bremse bei Überschreitung der ersten Drehzahlgrenze von 2.260 Umdrehungen pro Minute aktiviert und greift bei ungefähr 11,5 Sekunden ein, und mit einer geringen Zeitverzögerung beginnt die mechanische Bremse zu wirken.

In Fig. 3f ist das Turmfußbiegemoment in kNm über der Zeit für die beiden Fälle dargestellt. Es ist deutlich zu erkennen, dass der zweite Fall (gestrichelt) im Hinblick auf das Turmfußbiegemoment kritischer ist. Es ist auch zu erkennen, dass sich in beiden Fällen eine gedämpfte Schwingung des Turms durch die Bö ergibt.

In Fig. 3g ist das Rotordrehmoment in kNm dargestellt. Auch in diesem Fall sind die unterschiedlichen Fälle in durchgezogener und gestrichelter Linie dargestellt. Erkennbar ist, dass der Triebstrang durch den plötzlichen Lastabfall in beiden Fällen zu einer starken Torsionsschwingung angeregt wird, vergleichbar mit einer vorgespannten Drehfeder die plötzlich losgelassen wird. Im zweiten (gestrichelt dargestellten Fall) ist die Verschiebung der Schwingung durch die einfallende mechanische Bremse erkennbar.

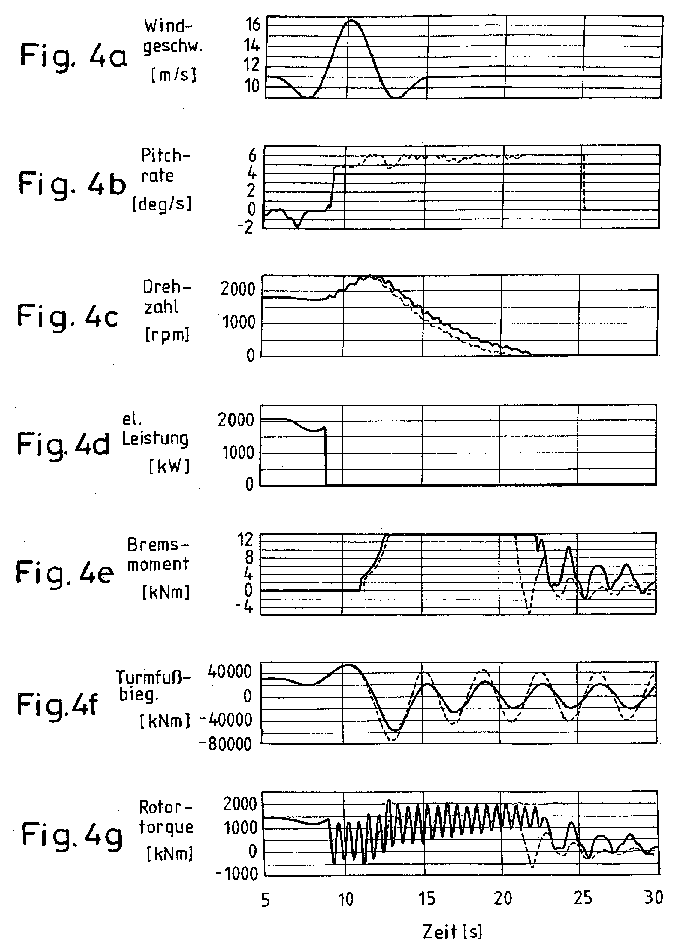

Um die Erfindung noch besser zu verdeutlichen, ist in den Figuren 4a bis 4g ein entsprechender Lastfall einer entsprechenden extremen Windbö (Jahresbö) gemäß Fig. 4a bei Lastabfall des Generators gemäß Fig. 4d dargestellt. Es ist eine unterschiedliche Verfahrensführung dargestellt, zum einen ein bevorzugter erfindungsgemäßer Betrieb der Windenergieanlage (durchgezogene Linien) und zum anderen eine etwas weniger bevorzugte allerdings erfinderische Betriebsführung. Diese weist im Gegensatz zum Stand der Technik bereits sehr geringe Blattverstellungsraten auf, die auf sehr niedrige Werte von 5°/s bzw. 6°/s bei Notstopp festgelegt wurden. Diese Betriebsführung weist jedoch keine erste Drehzahlgrenze zur Auslösung der Bremse über die Betriebsführung auf, sondern lediglich die Bremsauslösung über die Sicherheitseinrichtung bei einer Drehzahl von 2.400 Umdrehungen pro Minute. Zunächst wird dieser gestrichelt dargestellte Betriebsführungsablauf beschrieben.

Gemäß Fig. 4d ist zu erkennen, dass der Lastabfall ungefähr in der Mitte der aufsteigenden Flanke der Windbö aus Fig. 4a stattfindet, also im kritischen Bereich. Bei dem weniger bevorzugten Ausführungsbeispiel wird beim Lastabwurf eine Blattverstellungsrate von 5°/s angefordert. Bei Überschreitung der Auslösedrehzahl von 2.400 Umdrehungen pro Minute (s. Fig. 4.c) wird über die Sicherheitseinrichtung ein Notstopp ausgelöst. Eine erhöhte Blattverstellrate von 6 °/ sec wird angefordert, die jedoch aufgrund einer knapp ausgelegten Winkelverstelleinrichtung nicht konstant eingehalten werden kann. Gleichzeitig wird die mechanische Bremse ausgelöst, so dass sich bei dieser Betriebsweise eine schnellere Drehzahlreduzierung ergibt als im durchgezogen dargestellten bevorzugten Ausführungsbeispiel. Hieraus resultieren relativ hohe Turmfußbiegemomente (Fig.4f).

Hingegen wird im bevorzugten erfindungsgemäßen Ausführungsbeispiel gemäß der durchgezogenen Linie in Fig. 4b die Blattverstellungsrate auf weniger als 4,6°/s, insbesondere auf genau 4°/s eingestellt und geregelt. Bei Überschreitung der ersten Drehzahlgrenze (hier 2.270 Umdrehungen pro Minute) greift gemäß Fig. 4e die mechanische Bremse ein, also etwas früher als beim weniger bevorzugten Ausführungsbeispiel. Durch die geringe Blattverstellgeschwindigkeit ist insgesamt die Rotorverzögerung weniger abrupt. Entsprechend ergeben sich gemäß Fig. 4f günstigere Turmfußbiegemomente bei dem bevorzugten Ausführungsbeispiel (durchgezogene Linie) im Vergleich zum weniger bevorzugten Ausführungsbeispiel (gestrichelte Linie). Das Rotordrehmoment über der Zeit ist entsprechend in Fig. 4g dargestellt. Es ist eine begrenzte Zunahme der Triebstrangbelastung zu erkennen, die aber im Verhältnis zur Lastreduzierung im Turm akzeptabel ist, insbesondere deshalb, weil es sich um einen sehr seltenen Lastfall handelt. Erkennbar ist auch, dass negative Bremsmomente auftreten, weil der Rotor gegen die Bremse schwingt.

Die Erfindung betrifft somit die Auslegung und den Betrieb von Windenergieanlagen, insbesondere für die DLC1.5 (Design Load Case für eine Einjahresbetriebsbö mit Netzausfall). Bei herkömmlicher Betriebsführung können Turmfußbiegemomente von bis zu 100.000 kNm (inklusive Sicherheitsfaktor) auftreten. Ein erhöhter aerodynamischer Schub, der umso größer ist, je höher und dynamischer der Turm ist, d.h. je niedriger die Turmeigenfrequenz ist, kann die Eigendynamik des Turms zusätzlich verstärken.

Durch Änderung der Blattverstellungsrate von beispielsweise 6 auf 5°/s und Erhöhung der Auslösedrehzahl für die Sicherheitskette von 2.400 auf 2.500 Umdrehungen pro Minute und Vorsehen einer mechanischen Bremsleistung bei Überschreiten einer ersten Drehzahlgrenze von 2.200 Umdrehungen pro Minute kann ohne weiteres bei der gezeigten Beispielanlage mit 2 MW Nennleistung eine Reduzierung der Turmfußbiegemomente von 14 % erreicht werden. Die erste Drehzahlgrenze wird vorzugsweise so gewählt, dass bei Netzausfall bzw. Wegfall der Netzlast ohne Auftreten einer Bö die Blattverstellung ausreicht, um einen sicheren Betrieb ohne mechanische Bremse zu gewährleisten. Diese fällt nur dann ein, wenn zusätzlich noch zu einem ungünstigen Zeitpunkt eine Windbö einfällt. Bei Erhöhen der ersten Drehzahlgrenze, beispielsweise auf 2.230 oder 2.270 Umdrehungen pro Minute ergibt sich nur ein gering höheres Turmfußbiegemoment im Vergleich zu dem Fall bei 2.200 Umdrehungen pro Minute, weshalb dieses, wie in Figur 4 gezeigt, von Vorteil für eine einfache Parametrierung des Betriebsführungssystems bzw. der Betriebsführungseinrichtung sein kann, z.B. wenn diese Drehzahlgrenze bereits für andere Betriebsführungsabläufe vorhanden ist. Eine weitere Reduzierung des Turmfußbiegemoments kann dadurch erzielt werden, dass die Blattverstellungsrate weiter minimiert wird, beispielsweise vorzugsweise auf 4,5°/s oder weiter vorzugsweise auf 4°/s, wie in Fig. 4b gezeigt.

Die zweite Drehzahlgrenze kann bei einer 1,5 MW Anlage durch die Erfindung höher ausgestaltet werden als üblich, beispielsweise auf 2.570 Umdrehungen pro Minute oder sogar auf 2.660 Umdrehungen pro Minute. Durch die Erfindung wird die mechanische Bremse, die in Fig. 4e dargestellt ist, früher betätigt als bisher üblich. Außerdem wird eine hohe Blattverstellungsrate beispielsweise durch Verwendung einer ungeregelten Verstellung direkt über einen Akkumulator vermieden. Die Triebstrangbelastung wird hierbei, wie in Fig. 4g erkennbar, nicht deutlich verschlechtert. Vorzugsweise wird das Verfahren zum Betrieb der Windenergieanlage nur bei mittleren Windgeschwindigkeiten größer als 9 m/s und kleiner als ungefähr 20 m/s verwendet.

Vorstehend wurde die Erfindung in einigen miteinander verbundenen und auch in getrennten Varianten dargestellt. Die vorstehende Offenbarung ist für den Fachmann so zu verstehen, dass auch eine Kombination der getrennten Varianten vorgenommen werden kann. Insbesondere können Teile oder ein Teil des Gegenstandes einer erfindungsgemäßen Lösung, die in einem nachfolgenden nebengeordneten Anspruch seinen Niederschlag gefunden hat und/oder eine oder mehrere bevorzugte Ausführungsformen auch Merkmale einer weiteren erfindungsgemäßen Lösung sein, bei der dieses Merkmal oder diese Merkmale nicht unmittelbar in der Beschreibung im Zusammenhang mit dieser Lösung genannt sind.

### Bezugszeichenliste

- 10: Windenergieanlage
- 11: Turm
- 12: Rotor
- 13: Rotorwelle
- 14: Rotorblatt
- 15: Betriebsführung
- 15': Betriebsführung mit integrierter Sicherheitsüberwachung
- 16: Sicherheitsüberwachung
- 17: Regler
- 18: Blattverstellung
- 19: mechanische Bremse
- 20: Sicherheitskette
- 21: elektrische Komponenten
- 22: schnelle Welle
- 23: Generator (mit Läufer und Stator)
- 24: Getriebe
- 25: Netz
- 26: Datenverbindung
- 27: Datenverbindung
- 28: Winkelverstellung
- 29: Rotationsrichtung
- 30: Störsignal
- 31: Windbö

## Patentansprüche

1. Verfahren zum Betreiben einer Windenergieanlage (10), wobei die Windenergieanlage (10) einen Rotor (12, 13, 22), wenigstens ein winkelverstellbares Rotorblatt (14), eine mechanische Bremsvorrichtung (19) zum Abbremsen des Rotors (14), eine Betriebsführungseinrichtung (15, 15') und ein Sicherheitssystem (16, 20) aufweist, **gekennzeichnet durch** die folgenden Verfahrensschritte:
- Abbremsen des Rotors (12, 13, 22) über eine Winkelverstellung (28) mit einer mittleren Winkelverstellungsrate von weniger als 8,5°/s des wenigstens einen Rotorblatts (14) nach Auftritt eines Störsignals (30),
- Abbremsen des Rotors (12, 13, 22) über die mechanische Bremsvorrichtung (19), sobald die Drehzahl des Rotors (12, 13, 22) eine vorgebbare erste Drehzahlgrenze überschreitet, wobei die mechanische Bremsung durch die Betriebsführungseinrichtung (15, 15') ausgelöst wird,
- Auslösen des Sicherheitssystems (16, 20), sobald die Drehzahl des Rotors (12, 13, 22) eine vorgebbare zweite Drehzahlgrenze überschreitet, wobei der Rotor (12, 13, 22) abgebremst wird und wobei die zweite Drehzahlgrenze größer ist als die erste Drehzahlgrenze.

2. Verfahren nach Anspruch 1, **dadurch gekennzeichnet, dass** die zweite Drehzahlgrenze bei einer Windbö (31) mit einer Auftrittswahrscheinlichkeit von einmal im Jahr nicht überschritten wird, wobei insbesondere das Störsignal (30) ein Überschreiten einer dritten Drehzahlgrenze, die kleiner ist als die erste Drehzahlgrenze, ein Lastabwurf des Generators (23), ein Fehler im Netz (25) und/oder ein Fehler in der Winkelverstellung (28) wenigstens eines Rotorblatts (16) ist.

3. Verfahren nach Anspruch 1 oder 2, **dadurch gekennzeichnet, dass** die Winkelverstellungsrate des wenigstens einen Rotorblatts (14) nach Auftritt des Störsignals (30) kleiner als 8°/s, insbesondere kleiner als 6,5°/s, insbesondere kleiner als 4,6°/s ist, wobei insbesondere die Winkelverstellungsrate von einer der Betriebsführungseinrichtung (15, 15') zugeordneten Regelvorrichtung (15, 15') oder einer separaten Regelvorrichtung (17) geregelt wird, wobei insbesondere die Winkelverstellungsrate des wenigstens einen Rotorblatts (10) bei Überschreiten eines vorgebbaren Blattwinkels auf eine kleinere Winkelverstellungsrate, insbesondere auf eine Winkelverstellungsrate, die kleiner als die Hälfte, insbesondere kleiner als ein Viertel der vorherigen Winkelverstellungsrate, geändert wird.

4. Verfahren nach einem der Ansprüche 1 bis 3 **dadurch gekennzeichnet, dass** die erste Drehzahlgrenze in einem Bereich von mehr als 15 % oberhalb einer Nenndrehzahl der Windenergieanlage (10), die insbesondere eine Nennleistung von mehr als 1,45 MW aufweist, liegt, wobei insbesondere die erste Drehzahlgrenze zwischen 20 und 35 %, insbesondere zwischen 22 und 28 % oberhalb der Nenndrehzahl der Windenergieanlage (10) liegt, wobei insbesondere die zweite Drehzahlgrenze in einem Bereich von 35 % bis 45 % oberhalb einer Nenndrehzahl der Windenergieanlage (10) liegt, wobei insbesondere die zweite Drehzahlgrenze in einem Bereich von 5 % bis 20 % oberhalb der ersten Drehzahlgrenze der Windenergieanlage (10) liegt, wobei insbesondere die dritte Drehzahlgrenze in einem Bereich von 10 % bis 20 %, insbesondere von 15 % bis 17 %, oberhalb einer Nenndrehzahl der Windenergieanlage (10) liegt.

5. Verfahren nach einem der Ansprüche 1 bis 4, **dadurch gekennzeichnet, dass** das Abbremsen des Rotors (12, 13, 22) über die mechanische Bremsvorrichtung (19) bei Unterschreiten einer vierten vorgebbaren Drehzahlgrenze beendet wird, wobei insbesondere das Abbremsen des Rotors (12, 13, 22) über die mechanische Bremsvorrichtung (19) beendet wird, wenn ein mittlerer Rotorblattwinkel einen vorgebbaren Grenzwert überschreitet und eine vorgebbare Zeit seit dem Beginn des Abbremsens des Rotors (12, 13, 22) über die mechanische Bremsvorrichtung (19) überschritten ist.

6. Windenergieanlage (10) mit einem Rotor (12, 13, 22), wenigstens einem winkelverstellbaren Rotorblatt (4), einer mechanischen Bremse (19) zum Abbremsen des Rotors (12, 13, 22), einer Betriebsführungseinrichtung (15, 15') und einem Sicherheitssystem (16, 20), **dadurch gekennzeichnet, dass** eine erste Bremsvorrichtung (18) vorgesehen ist, die den Rotor (12, 13, 22) über eine Winkelverstellung (28) des wenigstens einen Rotorblatts (14) mit einer mittleren Winkelverstellungsrate von weniger als 8,5°/s bei Vorhandensein eines Störsignals (20) bremst, wobei eine zweite Bremsvorrichtung (19) zum mechanischen Bremsen des Rotors (12, 13, 22) vorgesehen ist, sobald die Drehzahl des Rotors (12, 13, 22) eine vorgebbare erste Drehzahlgrenze überschreitet, wobei die zweite Bremsvorrichtung (19) durch die Betriebsführungseinrichtung (15, 15') auslösbar ist, wobei das Sicherheitssystem (16, 20) in dem Fall, in dem die Drehzahl des Rotors (12, 13, 22) eine vorgebbare zweite Drehzahlgrenze überschreitet, zum Bremsen des Rotors (12, 13, 22) vorgesehen ist, wobei die zweite Drehzahlgrenze größer ist als die erste Drehzahlgrenze.

7. Windenergieanlage (10) nach Anspruch 6, **dadurch gekennzeichnet, dass** die zweite Drehzahlgrenze bei einer Windbö (31) mit einer Auftrittswahrscheinlichkeit von einmal im Jahr nicht überschritten wird, wobei insbesondere das Störsignal (30) ein Überschreiten einer dritten Drehzahlgrenze, welche kleiner ist als die erste Drehzahlgrenze, ein Lastabwurf des Generators (23), ein Fehler im Netz (25) und/oder ein Fehler in der Winkelverstellung (28) wenigstens eines Rotorblatts (14) ist.

8. Windenergieanlage (10) nach Anspruch 6 oder 7, **dadurch gekennzeichnet, dass** die Winkelverstellungsrate des wenigstens einen Rotorblatts (14) bei Vorhandensein des Störsignals (30) kleiner 8°/s, insbesondere kleiner 6,5°/s, insbesondere kleiner 4,6°/s eingestellt ist, wobei insbesondere die Winkelverstellungsrate von einer der Betriebsführungseinrichtung (15, 15') zugeordneten Regelvorrichtung (15, 15') oder einer separaten Regelvorrichtung (17) regelbar ist, wobei insbesondere die Winkelverstellungsrate des wenigstens einen Rotorblatts (14) bei Überschreitung eines vorgebbaren Blattwinkels auf eine kleinere Winkelverstellungsrate, insbesondere auf eine Winkelverstellungsrate, die kleiner als die Hälfte, insbesondere kleiner als ein Viertel der vorherigen Winkelverstellungsrate, änderbar ist.

9. Windenergieanlage (10) nach einem der Ansprüche 6 bis 8, **dadurch gekennzeichnet, dass** die erste Drehzahlgrenze in einem Bereich von mehr als 15 % oberhalb einer Nenndrehzahl der Windenergieanlage (10) liegt, wobei insbesondere die erste Drehzahlgrenze zwischen 20 und 35 %, insbesondere zwischen 22 und 28 % oberhalb der Nenndrehzahl der Windenergieanlage (10) liegt, wobei insbesondere die zweite Drehzahlgrenze in einem Bereich von 35 % bis 45 % oberhalb einer Nenndrehzahl der Windenergieanlage (10), die insbesondere eine Nennleistung von mehr als 1,45 MW aufweist, liegt, wobei insbesondere die zweite Drehzahlgrenze in einem Bereich von 5 % bis 20 % oberhalb der ersten Drehzahlgrenze der Windenergieanlage (10) liegt, wobei insbesondere die dritte Drehzahlgrenze in einem Bereich von 10 % bis 20 %, insbesondere von 15 % bis 17 %, oberhalb einer Nenndrehzahl der Windenergieanlage (10), die insbesondere eine Nennleistung von mehr als 1,45 MW aufweist, liegt.

10. Windenergieanlage (10) nach einem der Ansprüche 6 bis 9, **dadurch gekennzeichnet, dass** das Abbremsen des Rotors (12, 13, 22) über die mechanische Bremsvorrichtung (10) bei Unterschreiten einer vierten vorgebbaren Drehzahlgrenze beendbar ist, wobei insbesondere das Abbremsen des Rotors (12, 13, 22) über die mechanische Bremsvorrichtung (19) beendbar ist, wenn ein mittlerer Rotorblattwinkel einen vorgebbaren Grenzwert überschreitet und eine vorgebbare Zeit seit dem Beginn des Abbremsens des Rotors (12, 13, 22) über die mechanische Bremsvorrichtung (19) überschritten ist.

## Claims

1. A method for operating a wind turbine (10), wherein the wind turbine (10) has a rotor (12, 13, 22), at least one rotor blade (14) with an adjustable angle, a mechanical braking device (19) for braking the rotor (14), an operational control device (15, 15') and a safety system (16, 20), **characterized by** the following method steps:
- braking of the rotor (12, 13, 22) by means of an angle adjustment (28) with an average angle adjustment rate of less than 8.5°/s of the at least one rotor blade (14) after a fault signal (30) occurs,
- braking of the rotor (12, 13, 22) by means of the mechanical braking device (19) as soon as the rotational speed of the rotor (12, 13, 22) exceeds a predefinable first rotational speed limit, wherein the mechanical braking is triggered by the operational control device (15, 15'),
- activating the safety system (16, 20) as soon as the rotational speed of the rotor (12, 13, 22) exceeds a predefinable second rotational speed limit, wherein the rotor (12, 13, 22) is decelerated and wherein the second rotational speed limit is greater than the first rotational speed limit.

2. The method according to claim 1, **characterized in that** the second rotational speed limit is not exceeded in the case of a wind gust (31) with a probability of occurrence of once per year, wherein in particular the fault signal (30) is an exceeding of a third rotational speed limit, being less than the first rotational speed limit, which is a load shedding of the generator (23), a fault in the network (25) and/or a fault in the angle adjustment (28) of at least one rotor blade (16).

3. The method according to claim 1 or 2, **characterized in that** the angle adjustment rate of the at least one rotor blade (14) after the fault signal (30) occurs is less than 8°/s, in particular less than 6.5°/s, in particular less than 4.6°/s, wherein in particular the angle adjustment rate is controlled by a control apparatus (15, 15') assigned to the operational control device (15, 15') or a separate control apparatus (17), wherein in particular the angle adjustment rate of the at least one rotor blade (10) is changed to a smaller angle adjustment rate, in particular to an angle adjustment rate, which is less than half, in particular less than a fourth, of the previous angle adjustment rate when a predefinable blade angle is exceeded.

4. The method according to one of claims 1 to 3, **characterized in that** the first rotational speed limit lies in a range of more than 15% above a nominal rotational speed of the wind turbine (10), which has in particular a nominal output of more than 1.45 MW, wherein in particular the first rotational speed limit lies between 20 and 35%, in particular between 22 and 28% above the nominal speed of the wind turbine (10), wherein in particular the second rotational speed limit lies in a range of 35% to 45% above a nominal speed of the wind turbine (10), wherein in particular the second rotational speed limit lies in a range of 5% to 20% above the first rotational speed limit of the wind turbine (10), wherein in particular the third rotational speed limit lies in a range of 10% to 20%, in particular from 15% to 17%, above a nominal speed of the wind turbine (10).

5. The method according to one of claims 1 to 4, **characterized in that** the braking of the rotor (12, 13, 22) by means of the mechanical braking device (19) is terminated when a fourth predefinable rotational speed limit is fallen short of, wherein in particular the braking of the rotor (12, 13, 22) is terminated by means of the mechanical braking device (19), when an average rotor blade angle exceeds a predefinable threshold value and a predefinable time since the start of the braking of the rotor (12, 13, 22) by means of the mechanical braking device (19) is exceeded.

6. A wind turbine (10) with a rotor (12, 13, 22), at least one rotor blade (4) with an adjustable angle, a mechanical brake (19) for braking the rotor (12, 13, 22), an operational control device (15, 15') and a safety system (16, 20), **characterized in that** a first braking device (18) is provided, which brakes the rotor (12, 13, 22) by means of an angle adjustment (28) of the at least one rotor blade (14) with an average angle adjustment rate of less than 8.5°/s in the case of the presence of an fault signal (20), wherein a second braking device (19) is provided for the mechanical braking of the rotor (12, 13, 22), as soon as the rotational speed of the rotor (12, 13, 22) exceeds a predefinable first rotational speed limit, wherein the second braking device (19) can be triggered by the operational control device (15, 15'), wherein the safety system (16, 20) is provided, in the event that the rotational speed of the rotor (12, 13, 22) exceeds a predefinable second rotational speed limit, for braking the rotor (12, 13, 22), wherein the second rotational speed limit is greater than the first rotational speed limit.

7. The wind turbine (10) according to claim 6, **characterized in that** the second rotational speed limit is not exceeded in the case of a wind gust (31) with a probability of occurrence of once per year, wherein in particular the fault signal (30) is an exceeding of a third rotational speed limit, being less than the first rotational speed limit, which is a load shedding of the generator (23), a fault in the network (25) and/or a fault in the angle adjustment (28) of at least one rotor blade (14).

8. The wind turbine (10) according to claim 6 or 7, **characterized in that** the angle adjustment rate of the at least one rotor blade (14) in the case of the presence of the fault signal (30) is set to less than 8°/s, in particular less than 6.5°/s, in particular less than 4.6°/s, wherein in particular the angle adjustment rate is controlled by a control apparatus (15, 15') assigned to the operational control device (15, 15') or a separate control apparatus (17), wherein in particular the angle adjustment rate of the at least one rotor blade (14) is changeable to a smaller angle adjustment rate, in particular to an angle adjustment rate which is less than half, in particular less than a fourth, of the previous angle adjustment rate when a predefinable blade angle is exceeded.

9. The wind turbine (10) according to one of claims 6 to 8, **characterized in that** the first rotational speed limit lies in a range of more than 15% above a nominal rotational speed of the wind turbine (10), wherein in particular the first rotational speed limit lies between 20 and 35%, in particular between 22 and 28% above the nominal rotational speed of the wind turbine (10), wherein in particular the second rotational speed limit lies in a range of 35% to 45% above a nominal rotational speed of the wind turbine (10), which has in particular a nominal output of more than 1.45 MW, wherein in particular the second rotational speed limit lies in a range of 5% to 20% above the first rotational speed limit of the wind turbine (10), wherein in particular the third rotational speed limit lies in a range of 10% to 20%, in particular of 15% to 17%, above a nominal rotational speed of the wind turbine (10), which has in particular a nominal output of more than 1.45 MW.

10. The wind turbine (10) according to one of claims 6 to 9, **characterized in that** the braking of the rotor (12, 13, 22) by means of the mechanical braking device (19) can be terminated when a fourth predefinable rotational speed limit is fallen short of, wherein in particular the braking of the rotor (12, 13, 22) can be terminated by means of the mechanical braking device (19), when an average rotor blade angle exceeds a predefinable threshold value and a predefinable time since the start of the braking of the rotor (12, 13, 22) by means of the mechanical braking device (19) is exceeded.

## Revendications

1. Procédé pour le fonctionnement d'une éolienne (10), dans lequel l'éolienne (10) comprend un rotor (12, 13, 22), au moins une pale de rotor (14) réglable angulairement, un dispositif de freinage mécanique (19) pour freiner le rotor (14), un dispositif (15, 15') de commande de fonctionnement et un système de sécurité (16, 20), **caractérisé en ce qu'**il comprend les étapes suivantes :
- le fait de freiner le rotor (12, 13, 22) au moyen d'un réglage de l'angle (28) à un taux moyen de réglage de l'angle inférieur à 8,5°/s d'au moins une pale de rotor (14) après l'apparition d'un signal de perturbation (30),
- le fait de freiner le rotor (12, 13, 22) au moyen du dispositif de freinage mécanique (19), dès que la vitesse de rotation du rotor (12, 13, 22) dépasse une première limite de vitesse de rotation prédéterminée, le freinage mécanique étant déclenché par le dispositif (15, 15') de commande de fonctionnement,
- le fait de déclencher le système de sécurité (16, 20), dès que la vitesse de rotation du rotor (12, 13, 22) dépasse une deuxième limite de vitesse de rotation prédéterminée, le rotor (12,13, 22) étant ralenti et la deuxième limite de vitesse de rotation étant supérieure à la première limite de vitesse de rotation.

2. Procédé selon la revendication 1, **caractérisé en ce que** la deuxième limite de vitesse de rotation n'est pas dépassée lors d'une rafale de vent (31) ayant une probabilité d'occurrence d'une fois par an, le signal de perturbation (30) incluant en particulier le dépassement d'une troisième limite de vitesse de rotation qui est inférieure à la première limite de vitesse de rotation, le délestage du générateur (23), un défaut dans le réseau (25) et/ou une erreur de réglage de l'angle (28) d'au moins une pale de rotor (16).

3. Procédé selon la revendication 1 ou la revendication 2, **caractérisé en ce que** le taux de réglage de l'angle de ladite au moins une pale de rotor (14) après l'apparition du signal de perturbation (30) est inférieur à 8°/s, en particulier est inférieur à 6,5°/s, en particulier est inférieur à 4,6°/s, le taux de réglage de l'angle étant en particulier régulé par un dispositif (15, 15') de commande associé au dispositif (15, 15') de commande de fonctionnement ou à un dispositif de commande (17) séparé, le taux de réglage de l'angle de ladite au moins une pale de rotor (10) étant en particulier modifié pour atteindre un taux de réglage de l'angle plus petit lorsqu'un angle de pale prédéterminé est dépassé, en particulier un taux de réglage de l'angle qui est inférieur à la moitié, en particulier inférieur au quart, du taux de réglage de l'angle précédent.

4. Procédé selon l'une quelconque des revendications 1 à 3, **caractérisé en ce que** la première limite de vitesse de rotation est comprise dans une plage située à plus de 15% au-dessus d'une vitesse de rotation nominale d'une éolienne (10) qui, en particulier, a une puissance nominale supérieure à 1,45 mW, la première limite de vitesse de rotation étant en particulier comprise dans une plage qui est de 20 à 35%, en particulier de 22 à 28%, supérieure à la vitesse de rotation nominale de l'éolienne (10), la deuxième limite de vitesse de rotation étant en particulier de 35% à 45% supérieure à une vitesse de rotation nominale de l'éolienne (10), la deuxième limite de vitesse de rotation étant en particulier comprise dans une plage qui est de 5% à 20% supérieure à la première limite de vitesse de rotation de l'éolienne (10), la troisième limite de vitesse de rotation étant en particulier comprise dans une plage qui est de 10% à 20%, en particulier de 15% à 17%, supérieure à une vitesse de rotation nominale de l'éolienne (10).

5. Procédé selon l'une quelconque des revendications 1 à 4, **caractérisé en ce que** le freinage du rotor (12, 13, 22) au moyen du dispositif de freinage mécanique (19) est interrompu en cas de chute en dessous d'une quatrième limite de vitesse de rotation prédéterminée, le freinage du rotor (12, 13, 22) au moyen du dispositif de freinage mécanique (19) étant en particulier interrompu lorsqu'un angle moyen de pale de rotor dépasse une valeur limite prédéterminée et qu'une durée prédéterminée depuis le début du freinage du rotor (12, 13, 22) au moyen du dispositif de freinage mécanique (19) est dépassée.

6. Eolienne (10) comprenant un rotor (12, 13, 22), au moins pale de rotor (4) réglable angulairement, un dispositif de freinage mécanique (19) pour freiner le rotor (12, 13, 22), un dispositif (15, 15') de commande de fonctionnement et un système de sécurité (16, 20), **caractérisée en ce qu'**un premier dispositif de freinage (18) est prévu, freinant le rotor (12, 13, 22) au moyen d'un réglage de l'angle (28) de ladite au moins une pale de rotor (14), le taux moyen de réglage de l'angle étant inférieur à 8,5°/s en présence d'un signal de perturbation (20), un deuxième dispositif de freinage (19) étant prévu pour freiner mécaniquement le rotor (12, 13, 22) dès que la vitesse de rotation du rotor (12, 13, 22) est supérieure à une première limite de vitesse de rotation prédéterminée, le deuxième dispositif de freinage (19) étant déclenché par le dispositif (15, 15') de commande de fonctionnement, le système de sécurité (16, 20) étant prévu pour, dans le cas où la vitesse de rotation du rotor (12, 13, 22) est supérieure à la deuxième limite de vitesse de rotation prédéterminée, freiner le rotor (22 12, 13), la deuxième limite de vitesse de rotation étant supérieure à la première limite de vitesse de rotation.

7. Eolienne (10) selon la revendication 6, **caractérisée en ce que** la deuxième limite de vitesse de rotation n'est pas dépassée lors d'une rafale de vent (31) ayant une probabilité d'occurrence d'une fois par an, dans laquelle, le signal de perturbation (30) incluant en particulier le dépassement d'une troisième limite de vitesse de rotation qui est inférieure à la première limite de vitesse de rotation, le délestage du générateur (23), un défaut dans le réseau (25) et/ou une erreur de réglage de l'angle (28) d'au moins une pale de rotor (14).

8. Eolienne (10) selon la revendication 6 ou la revendication 7, **caractérisée en ce que** le taux de réglage de l'angle de ladite au moins une pale de rotor (14) en présence du signal de perturbation (30) est inférieur à 8°/s, en particulier inférieur à 6,5°/s, en particulier inférieur à 4,6°/s, le taux de réglage de l'angle étant en particulier commandé par un dispositif (15, 15') de commande associé au dispositif (15, 15') de commande de fonctionnement ou à un dispositif de commande (17) séparé, le taux de réglage de l'angle de ladite au moins une pale de rotor (14) étant en particulier modifiable pour atteindre un taux de réglage de l'angle plus petit lorsque un angle de pale prédéterminé est dépassé, en particulier un taux de réglage de l'angle qui est inférieur à la moitié, en particulier inférieur au quart, du taux de réglage de l'angle précédent.

9. Eolienne (10) selon l'une quelconque des revendications 6 à 8, **caractérisée en ce que** la première limite de vitesse de rotation est comprise dans une plage située plus de 15% au-dessus d'une vitesse de rotation nominale de l'éolienne (10), la première limite de vitesse de rotation étant en particulier située entre 20 et 35%, notamment entre 22 et 28%, au-dessus de la vitesse de rotation nominale de l'éolienne (10), la deuxième limite de vitesse de rotation étant en particulier comprise dans une plage de 35 à 45% située au-dessus d'une vitesse de rotation nominale de l'éolienne (10), laquelle a, en particulier, une puissance nominale de plus de 1,45 MW, la deuxième limite de vitesse de rotation étant en particulier comprise dans une plage qui est de 5 à 20% supérieure à la première limite de vitesse de rotation de l'éolienne (10), la troisième limite de vitesse de rotation étant en particulier comprise dans une plage qui est de 10 à 20%, en particulier de 15 à 17%, supérieure à la vitesse de rotation nominale de l'éolienne (10), laquelle a, en particulier, une puissance nominale de plus de 1,45 MW.

10. Eolienne (10) selon l'une quelconque des revendications 6 à 9, **caractérisée en ce que** le freinage du rotor (12, 13, 22) au moyen du dispositif de freinage mécanique (19) est interrompu en cas de chute de la vitesse de rotation en dessous d'une quatrième limite de vitesse de rotation prédéterminée, le freinage du rotor (12, 13, 22) au moyen du dispositif de freinage mécanique (19) étant en particulier apte à être interrompu lorsqu'un angle moyen de pale de rotor dépasse une valeur limite prédéterminée et qu'une durée prédéterminée depuis le début du freinage du rotor (12, 13, 22) au moyen du dispositif de frein mécanique (19) est dépassée.
